Europäisches Patentamt

European Patent Office

Office européen des brevets

(11) Publication number: **0 194 042 B1**

(12) **EUROPEAN PATENT SPECIFICATION**

(45) Date of publication of patent specification: **08.04.92** (51) Int. Cl.⁵: **G06K 19/08**, B42D 15/02

(21) Application number: **86300861.1**

(22) Date of filing: **07.02.86**

(54) **Embossed articles.**

(30) Priority: **07.02.85 GB 8503068**

(43) Date of publication of application:
**10.09.86 Bulletin 86/37**

(45) Publication of the grant of the patent:
**08.04.92 Bulletin 92/15**

(84) Designated Contracting States:
**CH DE FR IT LI NL SE**

(56) References cited:
EP-A- 0 040 839    FR-A- 2 321 159
GB-A- 2 129 739    US-A- 3 412 493
US-A- 4 033 059    US-A- 4 180 207

(73) Proprietor: **Thomas De La Rue and Company Ltd.**
**3-5 Burlington Gardens**
**GB-London W1A 1DL(GB)**

(72) Inventor: **Chatwin, Charles Edward**
**Slinford House Slinford**
**Horsham West Sussex(GB)**

(74) Representative: **Bayliss, Geoffrey Cyril et al**
**BOULT, WADE & TENNANT 27 Furnival Street**
**London EC4A 1PO(GB)**

Rank Xerox (UK) Business Services

## Description

The present invention relates to a method of forming an article with an embossed surface.

US-A-4033059 (Hutton & Merry) discloses forming an article having a surface which comprises an embossed patterned uniformly reflective portion by intaglio printing, which portion includes at least first and second non-light-diffracting pattern-defining relief elements defining at least first and second patterns, the pattern-defining relief elements being so structured that, when the direction of view of the surface is changed, the perceived relative distinctiveness of the pattern is changed (so-called latent or transitory images).

An intaglio imprint is obtained by pressing a suitable recording medium, for example, paper, against an engraved and inked plate so as to deform the medium into the ink-bearing engraved recesses of the plate. The resulting impression comprises a pattern formed of spaced and raised inked lines and/or other pattern elements.

GB-A-2 129 739 (American Bank Note Company) discloses a process of making a readable light diffracting record which comprises securing a laminated structure of an embossed foil layer and a thermoplastic layer to a substrate such as paper by a hot melt adhesive covering the embossed foil.

The paper may bear conventional printing, preferably intaglio, the printing being carried out preferably before but possibly after securing the laminated structure.

GB-A-2 129 739 also mentions prior art where the embossing and transfering processes are performed simultaneously.

The invention comprises a method of forming an article with an embossed surface comprising using a stamping plate to stamp a material to define an embossed patterned uniformly reflective surface portion, which portion includes at least first and second non-light-diffracting pattern-defining relief elements defining at least first and second patterns, the pattern-defining relief elements being so structured that, when the direction of view of the surface is changed the perceived relative distinctiveness of the pattern is changed, characterised by adhering over at least part of the patterned portion a sheet or foil by using the stamping plate simultaneously to apply the sheet or foil to the material in a hot foil blocking process.

The invention thus provides a method in which for example a coloured or metallic sheet or foil is applied to the article at the same time as the surface is embossed.

The sheet or foil may be a photograph, or the material may be a photograph, in which case the sheet or foil may comprise light diffracting elements, for example a diffraction grating or hologram.

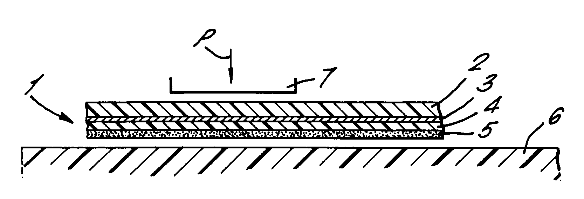

The accompanying drawing shows how a sheet or foil is applied to the surface of an article by hot foil blocking.

The drawing shows a laminated structure 1 comprising a carrier sheet 2, usually of clear plastics, which is coated with a release layer 3. On the release layer 3 is a coloured layer 4 (for example a metal foil or coloured plastics sheet) and on this is a layer of heat seal adhesive 5. The laminated structure 1 is placed so that its adhesive 5 is in contact with a substrate 6 to be blocked. A heated die or stamping plate 7, having the shape of the area to be blocked and engraved suitably to form an embossed area, is pressed into the back of the carrier sheet 2 as shown by the arrow P. This causes the adhesive 5 to fuse to the substrate 6 and the release layer 3 permits the carrier sheet 2 to be removed.

A good result can be difficult to obtain using stamping because of the difficulty of compressing the material into the recesses. Thus, if the substrate 6 is a thermoplastic, the temperature of the plate and the pressure applied have to be as high as possible because the material is cold and the dwell time typically limited.

The stamping plate includes an area having recesses corresponding to the relief elements which it is desired to apply to the surface and conventional engraving techniques may be used to prepare the plate. For example, the techniques used in engraving intaglio printing plates are suitable.

Preferably a plate is used which would generally be seen as having relief elements to form a pattern which would generally be seen as recessed, that is the majority of the area of the plate would be recessed with a small area in relief whilst the embossed surface would mainly be in relief with a small area of lines, for example, recessed.

Where the blocking foil is metallic, the extra reflectance makes the two patterns more easily distinguishable from each other and viewing is particularly attractive. Metal foil blocked surfaces are thus particularly desirable for novelties and packaging.

Alternatively, a magnetic foil may be used, in which case the embossing serves as a security device to prevent tampering with the foil.

If the substrate (6) does not emboss well, a foil or sheet (which may be transparent) may be applied thereto by hot foil blocking to form an embossable laminate.

Holograms are commonly applied to credit and cheque cards for security reasons as well as to non-secure documents for visual appearance. The holograms are applied using a hot foil blocking technique and are supplied to card manufacturers

2

on a roll. Usually there is considerable amount of waste foil surrounding each hologram image. If a blocking die was manufactured to have a flat area designed to transfer the hologram and adjacent to it an area engraved to form an embossed surface the resulting combination would be relatively tamper-proof and visually attractive. Also an additional security feature for plastics cards can be provided by measuring the distance between a feature in the relief area and a feature in the hologram. The two features may be analogous, that is the one corresponds to the other. The distance between the two images will vary for reasons of manufacturing tolerance and if this distance is measured by an appropriate optical technique and the measure recorded, for example, on the magnetic strip of the card, security against unauthorised duplication of cards can be achieved. Any attempt to produce a duplicate card will almost certainly result in the distance between the two images being different from the original. A cash dispenser incorporating a unit to compare the actual distance between the images with the data recorded on the strip would detect a difference and refuse payment.

The hologram could be replaced with a diffraction grating and the reflective embossing need overlap with only part of the hologram or diffraction grating foil or sheet. Alternatively, the reflective embossing may overlap with the hologram or diffraction grating itself. Moreover, as a security technique to prevent tampering with a foil or sheet which has been hot foil blocked onto a permanently embossable surface, or duplication of an article carrying such a sheet or foil, the technique is generally applicable.

"Latent images" may be applied to security documents or any other suitable articles on which security markings are required. The permanently embossable surface may be part of the article itself or it may be on a separate sheet or material, for example, which is secured to the article. Thus credit cards or tape cassettes, for example, may be embossed during the course of their manufacture to provide good quality patterns of relief elements. Since no inking or other colouring is necessary the process is relatively straight forward. On the other hand somewhat cruder patterns can be applied to documents using a simple press subsequent to their manufacture, for example, identity cards may be embossed on site by the issuers thereof.

In addition the ability of photographic paper to accept embossing permits the securing of a photograph by embossing an appropriate security latent image into the photograph simultaneously with its lamination into an identity card or passport. This provides an effective defence against the total removal of a genuine photograph and its replacement by an unauthorised one.

The plates needed to emboss the articles are difficult to counterfeit yet an unskilled person can easily check the authenticity of a document by tilting it to change the angle of view and watching the change in contrast between the two (or more) patterns.

The sheet or foil may be coloured if desired so that it contrasts more strongly with the substrate material or is more visually appealing. Such coloured embossing may be used with packaging.

## Claims

1. A method of forming an article with an embossed surface comprising using a stamping plate (7) to stamp a material (6) to define an embossed patterned uniformly reflective surface portion, which portion includes at least first and second non-light-diffracting pattern-defining relief elements defining at least first and second patterns, the pattern-defining relief elements being so structured that, when the direction of view of the surface is changed the perceived relative distinctiveness of the pattern is changed, characterised by adhering over at least part of the patterned portion a sheet or foil (4) by using the stamping plate (7) simultaneously to apply the sheet or foil (4) to the material in a hot foil blocking process.

2. A method as claimed in claim 1, wherein the sheet or foil (4) is a photograph.

3. A method as claimed in claim 1, wherein the material (6) is a photograph.

4. A method as claimed in claim 1 or 3, wherein the sheet or foil (4) comprises light diffracting elements.

5. A method as claimed in claim 4, characterised by recording on the article the distance between a feature defined by the relief elements and a feature defined by the diffracting elements.

6. A method as claimed in claim 5, characterised by recording the said distance on a magnetic recording medium.

## Revendications

1. Méthode de formation d'un article avec une surface marquée en relief comportant l'utilisation d'une plaque à estamper (7) pour estamper un matériau (6) pour définir une partie de surface à motif marqué en relief uniformément réfléchissante, cette portion comportant au moins un premier et un second élément en relief définissant le motif ne diffractant pas la lumière définissant au moins un premier et un second motif, les éléments en relief définissant le motif étant structurés de telle sorte que, lorsque la direction de vision de la surface change la netteté relative perçue du motif est modifiée, caractérisée en ce qu'on fait adhérer sur au moins une partie de la partie portant le motif une feuille ou une feuille métallique (4) en utilisant la plaque à estamper (7) simultanément pour appliquer la feuille ou la feuille métallique (4) au matériau dans un processus de gaufrage à chaud de la feuille.

2.  Méthode selon la revendication 1, caractérisée en ce que la feuille ou la feuille métallique (4) est une photographie.

3.  Méthode selon la revendication 1, caractérisée en ce que le matériau (6) est une photographie.

4.  Méthode selon la revendication 1 ou 3, caractérisée en ce que la feuille ou la feuille métallique (4) comporte des éléments diffractant la lumière.

5.  Méthode selon la revendication 4, caractérisée en ce qu'on enregistre sur l'article la distance entre un trait défini par les éléments de relief et un trait défini par les éléments de diffraction.

6.  Méthode selon la revendication 5, caractérisée en ce qu'un enregistre ladite distance sur un support d'enregistrement magnétique.

**Patentansprüche**

1.  Verfahren zur Ausbildung eines Gegenstands mit einer mit Einprägungen versehenen Oberfläche umfassend

    das Verwenden einer Prägeplatte (7) zum Prägen eines Materials (6), um einen mit Einprägungen und einem Muster versehen, gleichmäßig reflektierenden Oberflächenabschnitt festzulegen, welcher Oberflächenabschnitt wenigstens erste und zweite Licht nicht beugende, ein Muster festlegende Relief-Elemente einschließt, welche wenigstens erste und zweite Muster festlegen, wobei die ein Muster festlegenden Relief-Elemente derart strukturiert sind, daß die wahrgenommene relative Unterscheidbarkeit des Musters geändert wird, wenn die Blickrichtung auf die Oberfläche geändert wird,
    **gekennzeichnet**

    durch Kleben eines Blatts oder einer Folie (4) über wenigstens einen Teil des mit einem Muster versehenen Abschnitts, und

    durch Verwenden der Prägeplatte (7), um gleichzeitig das Blatt oder die Folie (4) in einem Folien-Wärmprägeverfahren auf das Material aufzubringen.

2.  Verfahren nach Anspruch 1,
    **dadurch gekennzeichnet,**
    daß das Blatt oder die Folie (4) eine Photographie ist.

3.  Verfahren nach Anspruch 1,
    **dadurch gekennzeichnet,**
    daß das Material (6) eine Photographie ist.

4.  Verfahren nach einem der Ansprüche 1 oder 3,
    **dadurch gekennzeichnet,**
    daß das Blatt oder die Folie (4) Licht beugende Elemente umfaßt.

5.  Verfahren nach Anspruch 4,
    **gekennzeichnet**
    durch Speichern des Abstands zwischen einem von den Relief-Elementen festgelegten Merkmal und einem von den beugenden Elementen festgelegten Merkmal auf dem Gegenstand.

6.  Verfahren nach Anspruch 5,
    **gekennzeichnet**
    durch Speichern des Abstands auf einem magnetischen Speichermedium.